# EUROPÄISCHE PATENTSCHRIFT

(11) **EP 0 487 890 B1**
(45) Veröffentlichungstag und Bekanntmachung des Hinweises auf die Patenterteilung: **28.09.1994**
(21) Anmeldenummer: 91117785.5
(22) Anmeldetag: 18.10.1991
(51) Int. Cl.: F16B 13/00, F16B 5/00, F16D 1/04

(54) **bauteilverbindung, insbesondere Flanschverbindung**
Member joint, especially flanged joint
Jonction d'élément, en particulier d'un joint à brides

(30) Priorität: 26.10.1990 DE 4034129
(43) Veröffentlichungstag der Anmeldung: 03.06.1992
(73) Patentinhaber: GKN Cardantec International Gesellschaft für Antriebstechnik mbH, D-45143 Essen (DE)
(72) Erfinder: Arand, Ernst Bernhard, W-5810 Witten (DE); Zoppke, Hartmut, Dr., W-4300 Essen 1 (DE); Faulbecker, Gerd, W-4320 Hattingen (DE)
(74) Vertreter: Harwardt, Günther, Dipl.-Ing.

(56) Entgegenhaltungen:
- DE-A- 2 139 869
- DE-B- 2 201 186
- DE-B- 2 827 031
- FR-A- 2 109 088

## Beschreibung

Die Erfindung betrifft eine Bauteilverbindung zur Verbindung zweier Bauteile, insbesondere Flanschverbindung für die Verbindung eines Befestigungsflansches einer Gelenkwelle als erstem Bauteil mit dem Gegenflansch als zweitem Bauteil in einem Kraftfahrzeug, mit in verteilt angeordneten und zueinander korrespondierenden Bohrungen der beiden Bauteile ineinandergesteckt angeordneten und an Anlageflächen der Bauteile sich abstützenden Spannelementen.

Bei einer solchen, aus der DE-AS 22 01 186 bekannten Bauteilverbindung sind die Spannelemente als Hohlnieten ausgebildet, deren ineinandergreifende Schäfte durch Aufweitung in fester Anlage zueinander gebracht werden. Eine gezielte axiale Vorspannung kann hierdurch nicht erreicht werden.

Aus der FR-PS 70 34381 (Veröffentlichungsnummer 2 109 088) ist eine Bauteilverbindung bekannt, bei der als Spannelement eine geschlitzte Spannhülse mit einem darin einführbaren Spannbolzen zum Einsatz kommt. Die Spannhülse weist einen Bund auf, der sich gegen eines der Bauteile anlegt. Das durch die Bohrungen der Bauteile herausragende Ende der Spannhülse wird durch Aufweiten bei Einführung des Spannbolzens in Anlage zur Bohrungskante des zweiten Bauteiles gebracht und ist durch die konische Ausbildung gehalten. Eine gezielte axiale Vorspannung kann hierdurch jedoch ebenfalls nicht erreicht werden.

Zur Verbindung eines Befestigungsflansches einer Gelenkwelle mit dem Gegenflansch in einem Kraftfahrzeug werden Schrauben eingesetzt. Mit diesen soll eine gezielte Vorspannung der miteinander zu verbindenden Bauteile erreicht werden. Von Nachteil bei einer solchen Gestaltung ist, daß der im Fahrzeug für die Montage zur Verfügung stehende Bauraum nur gering ist. Das Ansetzen der Schraubenschlüssel benötigt jedoch einen bestimmten Bauraum. Darüberhinaus sind Verschraubungen für eine Automatisierung der Montage nicht günstig.

Der Erfindung liegt daher die Aufgabe zugrunde, eine Bauteileverbindung insbesondere Flanschverbindung zu schaffen, bei der eine gezielte Vorspannung bei automatisierter Montage erreicht werden kann und welche darüberhinaus nur einen geringen Platzbedarf für die Montage erfordert und eine kompaktere Bauweise der Flansche zuläßt.

Diese Aufgabe wird erfindungsgemäß dadurch gelöst, daß die Spannelemente aus einer von ihrem Einführende ausgehend axial geschlitzten Spannhülse und einem darin einführbaren Spannbolzen bestehen, daß die Spannhülse an ihrem dem Einführende abgewandten Ende einen Bund aufweist, mit dessen Anlagefläche sie sich an einer Anlagefläche des ersten Bauteils abstützt, und am Einführungsende einen weiteren Bund mit einer Stützfläche aufweist, die nach radialer Aufweitung durch den Spannbolzen an einer Widerlagerfläche des anderen Bauteiles anliegt, und daß die freie axiale Länge der Spannhülse zwischen der Anlagefläche des Bundes und der Stützfläche des weiteren Bundes vor der Montage kleiner ist als der Abstand zwischen Anlagefläche und Widerlagerfläche der aneinanderliegenden Bauteile.

Bei der Einführung des Spannbolzens wird die Spannhülse in dem gewünschten Maße gereckt, um die notwendige Vorspannung erzielen zu können. Der Spannbolzen verbleibt in der Spannhülse und verhindert somit ein Lösen der Verbindung. Die geschlitzte Ausführung erlaubt ein leichtes Einführen der Spannhülse zunächst ohne den Spannbolzen, um so eine Vorzentrierung der miteinander zu verbindenden Bauteile zu erreichen. Im Normalfalle ist es zweckmäßig, die axiale Länge so zu gestalten, daß sie um ein bestimmtes Maß geringer ist als der Abstand der Anlageflächen, welches mindestens der elastischen Dehnung entspricht und unterhalb der Bruchdehnung der Spannhülse liegt.
Zur Überbrückung von Toleranzen und zur Erzielung der nötigen Vorspannkraft bei möglichst geringer Einpreßkraft für den Spannbolzen ist in weiterer Ausgestaltung vorgesehen, daß die Stützfläche unter einem Winkel geneigt zur Längsachse der Sperrhülse verläuft, der vom rechten Winkel abweicht. Bevorzugt beträgt der Winkel 60°.

Zweckmäßigerweise wird auch die Widerlagerfläche ebenfalls mit einer Neigung angeordnet, die der der Stützfläche der Spannhülse entspricht.

Es sind verschiedene alternative Gestaltungen des Spannbolzens möglich. So ist nach einem ersten Vorschlag vorgesehen, den Spannbolzen kürzer zu bemessen, als die Spannhülse. Seine Länge kann jedoch auch der der Spannhülse entsprechen oder aber größer als die Länge derselben gestaltet sein.

In weiterer Ausgestaltung ist für Spannbolzen, die gleichlang oder länger als die Spannhülse sind, vorgesehen, diese mit einem Kopf zu versehen.

Um ein selbständiges Lösen der Verbindung unter allen Umständen zu vermeiden, ist in weiterer Ausgestaltung vorgeschlagen, den Spannbolzen nach Montage gegen Auszug aus der Spannhülse zu sichern. Zur Sicherung können verschiedene alternative Lösungen vorgesehen sein. Bevorzugt ist der Spannbolzen gegenüber der Spannhülse durch einen Sicherungsring gegen Auszug gesichert. Dies kann dazu dadurch erreicht werden, daß für einen Spannbolzen mit Kopf, an dessen aus der Spannhülse nach der Montage herausragenden Ende, eine Nut für die Einbringung eines Sicherungsringes vorhanden ist. Alternativ kann der Sicherungsring in Nuten von Spannhülse und Sperrbolzen einsitzen. Es ist auch möglich, daß der Spannbolzen an seinen Enden mit Sperrnasen versehen ist, die sich nach Passieren der Bohrung der Spannhülse an die der Stützfläche nächstliegende Stirnfläche der Spannhülse anlegen. Ferner ist es möglich die Spannhülse und den Spannbolzen mit einer Mikroverzahnung zu versehen, die nach Montage ineinandergreifen. Schließlich ist auch eine Verklebung denkbar. Es ist auch eine kombinierte Ausbildung von Verklebung und Mikroverzahnung darstellbar. So kann z.B. eines der Bauelemente mit der Mikroverzahnung versehen sein, während das andere Bauteil einen mikroverkapselten Kleber enthält, der bei Erreichen der mikroverzahnten Schicht aktiviert wird. Als weitere Alternative kommt in Betracht, die Spannhülse im Bereich ihres Einführendes in ihrer Bohrung mit einer Eindrehung zur Aufnahme des Spannbolzens im montierten Zustand zu versehen.

Um die Vormontage der Bauteilverbindung zu erleichtern, ist in weiterer Ausgestaltung der Erfindung vorgesehen, daß das zweite Bauteil zur Widerlagerfläche hin in seiner Bohrung eine Ringkante aufweist. Bei der Vormontage von Hand hintergreift die Spannhülse mit dem radial vorstehenden Einführende die Ringkante und hält so die beiden Bauteile in Anlage zueinander, um die nachfolgende endgültige Montage durch ein Einpressen des Spannbolzens zu erleichtern.

Zur Vorbereitung der endgültigen Montage kann nach einem weiteren Vorschlag vorgesehen sein, die Spannhülse auf ihrem an den Bund angrenzenden und in die Bohrung des Bauteiles reichenden Außenabschnitt mit einer die Spannhülse vormontiert haltenden Verdickung zu versehen. Die Spannhülse ist dann vormontiert am ersten Bauteil angebracht, was die endgültige Montage mit dem zweiten Bauteil erleichtert.

Zur Demontage wird vorgeschlagen, die Spannhülse in ihrer Bohrung mit einer Ringfläche als Abstützbasis für ein Auspreßwerkzeug zu versehen. Die Ringfäche ist in Richtung auf das Einführende der Spannhülse angeordnet. Das Auspressen erfolgt in Richtung auf das Einführende zu. Dabei werden die Segmente der Spannhülse bis zum Abreißen durch das Auspreßwerkzeug beaufschlagt.

Nach einer ersten Ausführungsvariante ist die Ringfläche Teil einer von dem Bund der Spannhülse ausgehenden Bohrungsstufe. Es ist jedoch auch möglich, daß bei einer Ausbildung, bei der der Spannbolzen in einer Eindrehung der Spannhülse im montierten Zustand aufgenommen ist, die zum Einführende hin weisende Kante der Eindrehung sowie den Spannbolzen als Abstützbasis für das Auspreßwerkzeug zu nutzen.

Zur Demontage kann ferner in Ausgestaltung der Erfindung der Spannbolzen mit einer durchgehenden Gewindebohrung versehen sein. In diese kann eine Schraube zum Ausziehen eingesetzt werden. Das Ausziehen der Spannhülse wird dazu noch dadurch erleichtert, daß die Spannhülse beidseitig in ihrer Bohrung eine Anlaufschulter für den zurückgezogenen Spannbolzen aufweist.

Eine weitere Alternative zur Lösung der Verbindung besteht in der Zerstörung der Spannhülse bzw. der Segmente möglich. Als eine erste Lösung ist vorgeschlagen, daß die Spannhülse mittels eines von der Seite des Bundes her in die Bohrung eingepreßten Dornes, der die Segmente zerstört, lösbar ist.

Zur Erleichterung der Zerstörung ist die Spannhülse mit einer durch den Bund verlaufenden und bis zu den Segmenten reichenden kegeligen Bohrung versehen.

Eine Zerstörung der Segmente kann auch dadurch erreicht werden, daß eine hohe Zugkraft auf die Spannhülse ausgeübt wird. Hierzu ist in Ausgestaltung der Erfindung vorgeschlagen, daß die Bohrung der Spannhülse im Bereich des Bundes als Gewindebohrung für einen Ausziehstift augestaltet ist.

Des weiteren ist eine Zerstörung der Segmente durch ein Verdrillen der Spannhülse erreichbar. Hierzu ist der Bund der Spannhülse als Schlüsselsechskant zum Angriff eines Schlüssels ausgebildet. Ein weiterer Schlüssel kann genutzt werden, um den anderen Bund zu ergreifen. Durch Verdrehen der beiden Bunde gegeneinander mittels der angreifenden Schlüssel erfolgt die Zerstörung der Segmente.

Bevorzugte Ausführungsbeispiele der Erfindung sind in der Zeichnung schematisch dargestellt.

Es zeigt
- Figur 1: eine in einem schematisch dargestellten Lastkraftwagen eingebaute Gelenkwelle mit einer Flanschverbindung als Bauteilverbindung,
- Figur 2: eine erste Ausführungsform der Verbindung mit einer rechtwinklig zur Achse verlaufenden Stützfläche an der Spannhülse,
- Figur 3: eine alternative Ausführungsform mit schräg verlaufender Stützfläche der Spannhülse,
- Figur 4: eine Explosionsdarstellung einer Flanschverbindung mit Flanschen ohne Verzahnung,
- Figur 5: eine Ausführungsform bei der die Spannhülse entsprechend Figur 3 gestaltet ist, wobei jedoch der Spannbolzen keinen Kopf aufweist,
- Figur 6: eine Abwandlung der Ausbildung des Spannbolzens insofern, als dieser kürzer als die Länge der Spannhülse gestaltet ist,
- Figuren 7-11: verschiedene alternative Sicherungsmöglichkeiten für den Spannbolzen nach der Montage in der Spannhülse,
- Figur 12: eine abgewandelte Ausbildung der Spannhülse mit einer Ringfläche für den Angriff eines Demontagewerkzeugs,
- Figur 13: eine Flanschverbindung mit einer Vorfixierung der Flansche durch die Spannhülse,
- Figur 14: eine weitere Alternative zur Vorfixierung der Spannhülse gegenüber einem Flansch und
- Figur 15 bis 23: verschiedene alternative Möglichkeiten zur Gestaltung von Spannhülse und Spannbolzen, um eine Demontage zu ermöglichen.

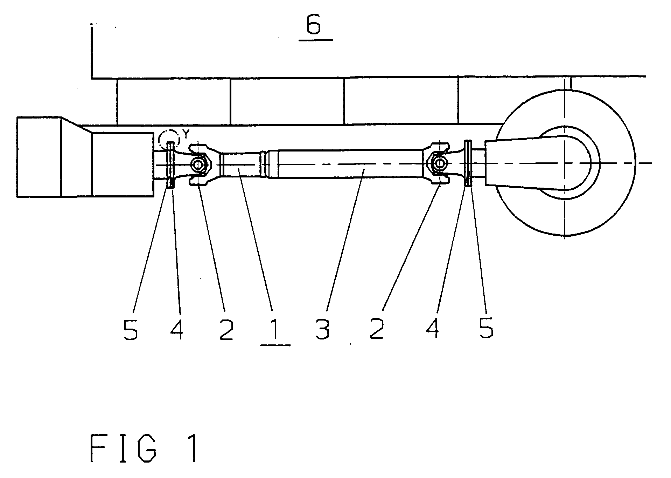

Figur 1 zeigt eine in einem teilweise dargestellten Fahrzeug 6 eingebaute Gelenkwelle 1. Diese besteht aus zwei im Abstand zueinander angeordneten Gelenken 2, die durch eine Zwischenwelle 3 miteinander verbunden sind. An den freien Enden der Gelenke 2 sind Flansche 4 angebracht, die mit entsprechenden Gegenflanschen 5 des Fahrzeugantriebstranges verbunden sind. So ist zum Beispiel das eine Ende der Gelenkwelle 1 mit dem Gegenflansch 5, der am Getriebeausgang angebracht ist, verbunden, während der am anderen Ende angebrachte Flansch 4 mit dem Gegenflansch 5 des Achsgetriebes verbunden ist.

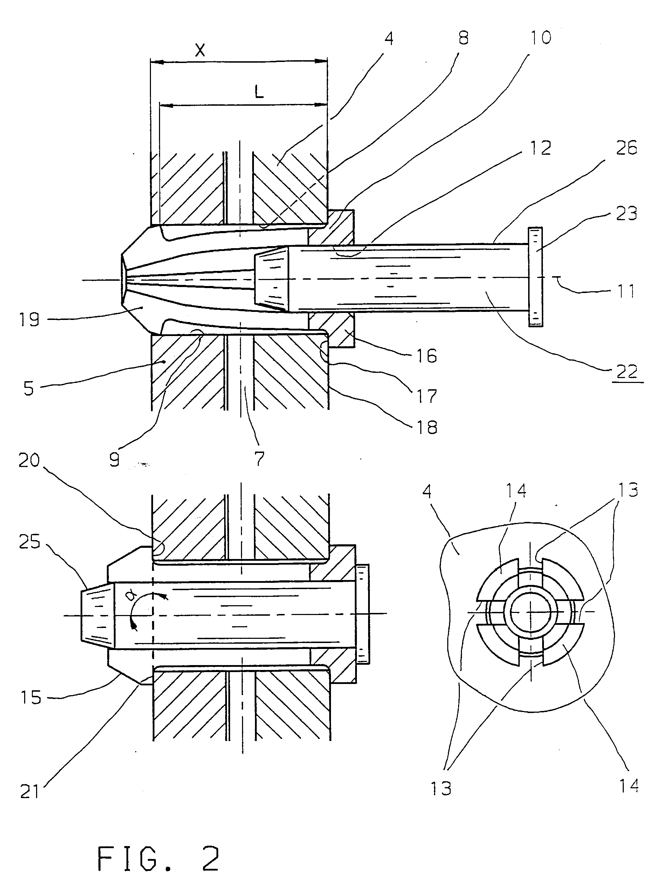

Die Gestaltung der als Flanschverbindung gestalteten Bauteileverbindung ist als Detail Y im vergrößerten Maßstab in den weiteren Figuren 2 bis 23 näher dargestellt und nachfolgend erläutert. Der mit 4 bezeichnete Flansch, der zur Gelenkwelle 1 gehört, weist auf einer Radialfläche eine Verzahnung 7 auf, die mit einer entsprechenden Gegenverzahnung des Gegenflansches 5 in Eingriff ist. Die beiden Flansche 4,5 weisen umfangsverteilt Bohrungen 8,9 auf, die zueinander korrespondieren. Zur Fixierung der Flansche 4,5 eineinandergegenüber ist in die korrespondierenden Bohrungen 8,9 eine Spannhülse 10 eingeschoben. Die Spannhülse 10 weist eine Bohrung 12 mit der Achse 11 auf. An einem Ende ist die Spannhülse 10 mit einem Bund 16 versehen. Das andere Ende ist als Einführende 15 gestaltet. Von dem Einführende 15 ausgehend ist zu diesem Zwecke die Spannhülse 10 geschlitzt. Die Schlitze sind mit 13 bezeichnet. Hierdurch werden Segmente 14 gebildet, die beim Einschieben der Spannhülse 10 in die Bohrungen 8,9 auf die Achse 11 zu federn können. Am Einführungsende 15 ist ein weiteren Bund 19 angebracht, der einen größeren Außendurchmesser als die Bohrung 9 aufweist. Dieser Bund 19 ist mit einer Stützfläche 20 versehen, die im montierten Zustand, wie in Figur 2 unten dargestellt, den Flansch 5 hintergreift und sich mit ihrer Stützfläche 20 an der Widerlagerfläche 21 des Flansches 5 anlegt.

Der Bund 16 ist ebenfalls mit einer Anlagefläche 17 versehen, die bei Einschieben der Spannhülse 10 in die Bohrung 8,9 in Anlage zu einer Anlagefläche 18 des Flansches 4 bringbar ist. Aus Figur 2 oben ist der Zustand während der Montage ersichtlich. Es ist erkennbar, daß die freie Länge der Spannhülse 10 zwischen der Anlagefläche 17 und der Stützfläche 20, die mit L bezeichnet ist, kleiner ist, als der Abstand der beiden Anlageflächen bzw. der Anlagefläche 18 des Flansches 4 zu der Widerlagerfläche 21 des Gegenflansches 5, welcher mit X bezeichnet ist. Aus Figur 2 oben ist erkennbar, daß in die Bohrung 12 der Spannhülse 10 ein Spannbolzen 22 teilweise eingeschoben ist. Dieser Spannbolzen 22 hat eine Außenfläche 26 miteinem Durchmesser, welcher dem der Bohrung 12 angepaßt ist. Er weist an einem Ende einen Kopf 23 und am anderen Ende eine Konusfläche 25 auf. Vor der endgültigen Montage sind aufgrund der Bemessung der freien Länge L der Spannhülse 10 das Einführende 19 bzw. die Segmente 14 aufeinanderzugefedert dargestellt. Sie befinden sich noch innerhalb der Bohrung 9. Bei Beaufschlagung des Spannbolzens 22 im Einschiebesinne, beispielsweise durch ein hydraulisches Werkzeug, wird über die Konusfläche 25 fortschreitend beim Einschieben eine Reckung der Spannhülse 10, insbesondere deren Segmente 14, erfolgen. Der weitere Bund 19 mit der Stützfläche 20 schiebt sich aus der Bohrung 9 heraus und wird im weiteren Verlaufe des Einschiebens des Spannbolzens 22 radial nach außen mit seiner Stützfläche 20 in Anlage an die Widerlagefläche 21 bewegt. Es ist erkennbar, daß die Stützfläche 20 mit einem Neigungswinkel zur Achse 11 angeordnet ist, der dem rechten Winkel entspricht. Aufgrund der Reckung wird eine Vorspannung in Achsrichtung der beiden Flansche 4,5 aufeinanderzu erreicht.

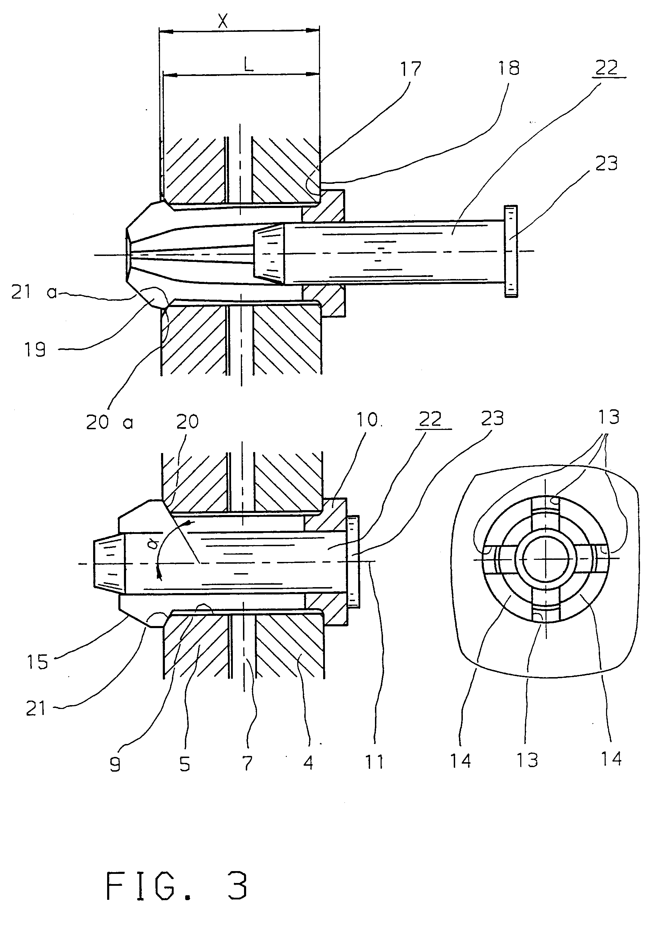

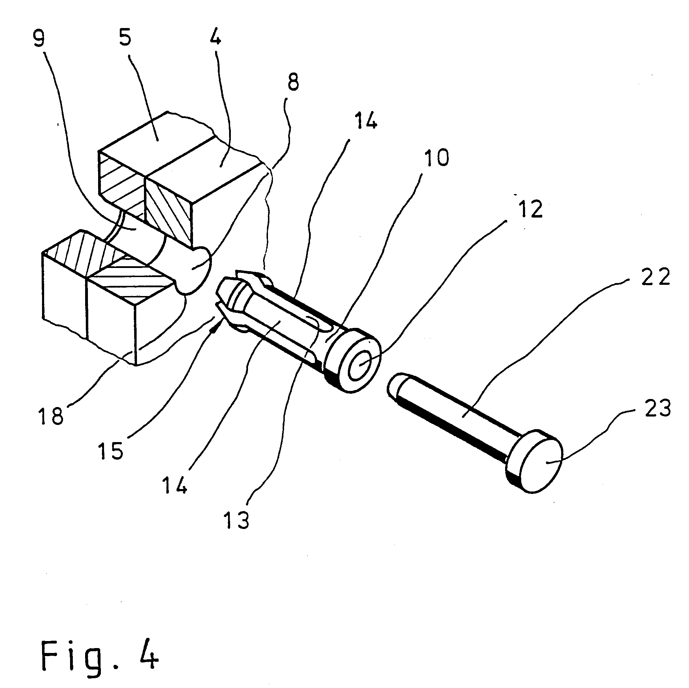

Bei dem Ausführungsbeispiel nach den Figuren 3 und 4 besteht der einzige Unterschied zu der Ausführung nach Figur 2 darin, daß die Stützfläche 20 der Spannhülse 10 nicht rechtwinklig, sondern mit einem spitzen Winkel zur Achse 11 geneigt verläuft. Bevorzugt ist eine Neigung mit einem Winkel von 60° vorgesehen. Die Widerlagerfläche 21 ist entsprechend als Fase zur Bohrung 9 des Flansches 5 gestaltet. Die Streckung der Spannhülse 10 wird durch den schrägen Verlauf beim Einpressen des Spannbolzens 22 erleichtert. Die Einpreßkräfte zur Erzielung der gewünschten Vorspannung sind entsprechend geringer. Bevorzugt wird der Längenunterschied je nach gewählter Stahlqualität so ausgebildet, daß eine Dehnung im Bereich der plastischen Verformung liegt.

Ein weiterer Vorteil des schrägen Verlaufs besteht darin, daß Toleranzen des Maßes X überbrückt werden können, wobei die gewollte Vorspannung zwischen den beiden Flanschen 4,5 gegeben ist. Ein weiterer Vorteil besteht darin, daß nach der Vormontage der Spannhülse 10 aber vor dem Einpressen des Spannbolzens 22 die Kante der Stützfläche 20a hinter die Kante 21a der Widerlagerfläche 21 des Gegenflansches greift und dadurch bereits eine axiale Fixierung von Flansch 4 und Gegenflansch 5 erfolgt. Dies ist zum Beispiel bei der Gelenkwellenmontage im Kraftfahrzeug vorteilhaft. Die federnden Segmente 14 können ein Einschieben von Hand zulassen.

Aus Figur 4 ist in der Explosionsdarstellung die gegenseitige Zuordnung der Teile erkennbar. Der Einfachheit halber wurde die Verzahnung, die zwischen den beiden Flanschen 4,5 vorhanden sein kann, weggelassen. Zunächst wird die Spannhülse 10 eingeschoben. Die federnden Segmente 14 können je nach Anwendungsfall auch eventuell von Hand eingeschoben werden. Die Streckung und Aufweitung des Einführungsendes 15 der Spannhülse 10 erfolgt danach durch Einschieben des Spannbolzens 22.

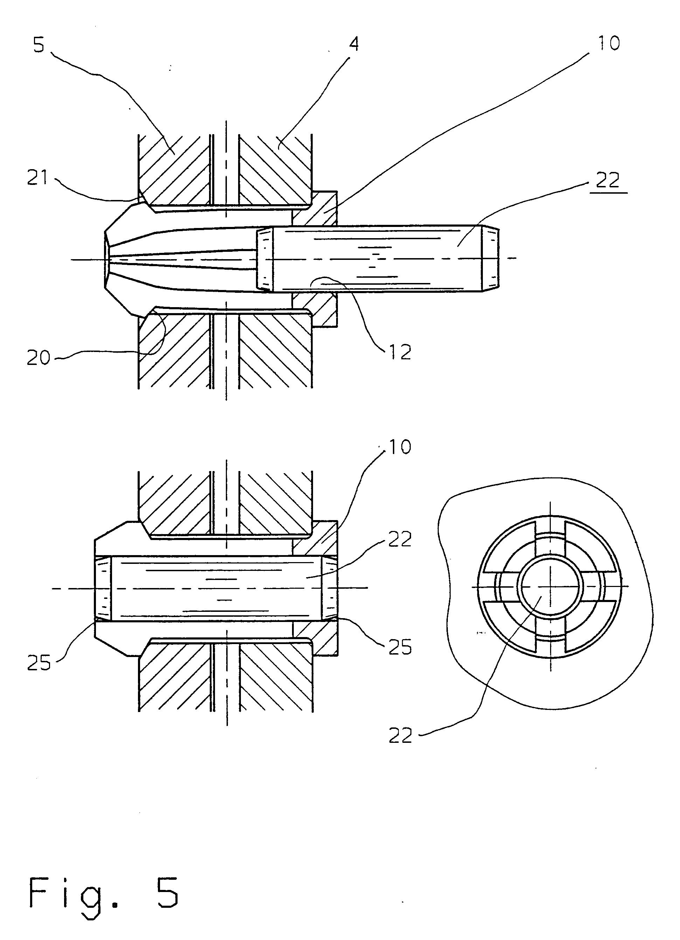

Beim Ausführungsbeispiel nach Figur 5, bei dem ebenfalls wieder der Montagevorgang und darunter die montierte Position von Spannhülse 10 und Spannbolzen 22 aufgezeigt sind, weist der Spannbolzen 22 jedoch im Unterschied zu den vorangegangenen Ausführungsbeispielen keinen Kopf auf. Der Spannbolzen 22 weist lediglich an seinen beiden Enden Konusflächen 25 auf. Dabei entspricht die Länge des Spannbolzens 22 der der Spannhülse 10. Die Funktion hinsichtlich des Verspannens mit der schräg verlaufenden Stützfläche 20 und der entsprechend verlaufenden Widerlagerfläche 21 ist analog der im Zusammenhang mit den Figuren 3 und 4 beschriebenen Ausführungsform.

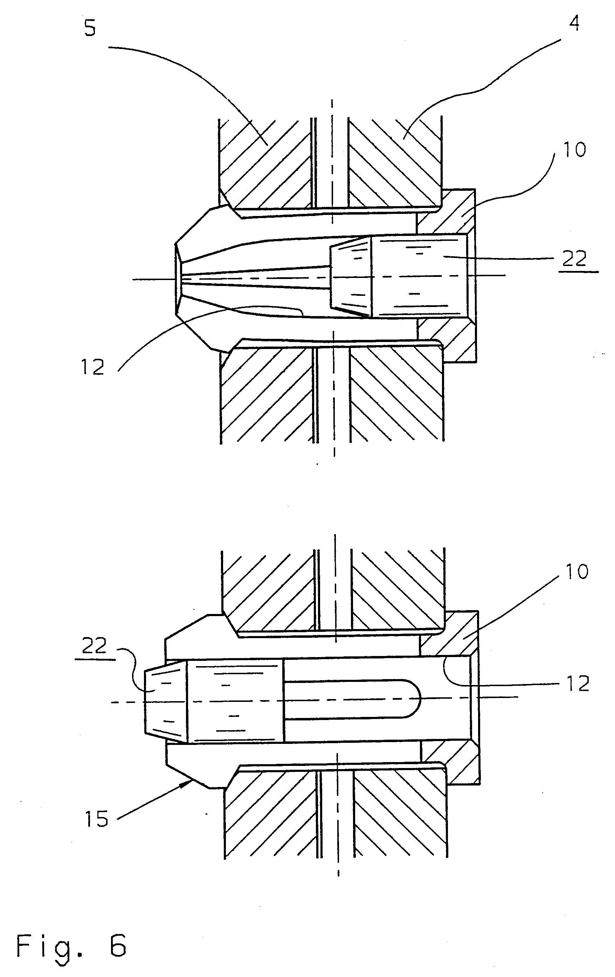

In Figur 6 ist eine weitere Ausführungsform des Spannbolzens 22 dargestellt. Der Spannbolzen 22 weist eine Länge auf, die geringer ist als die der Spannhülse 10. Von Vorteil ist dabei, daß beispielsweise die Bohrung 12 in der Spannhülse 10 genutzt werden kann, ein Werkzeug zum Einschieben des Spannbolzens 22 zu führen. Die Ausführung der Spannhülse 10 entspricht der im Zusammenhang mit Figur 3 und 4 beschriebenen. Der Spannbolzen 22 verbleibt in der in Figur 6 unten dargestellten Stellung, um den Bund, der im Bereich des Einführungsendes 15 der Spannhülse 10 gebildet ist, radial nach außen zu stützen.

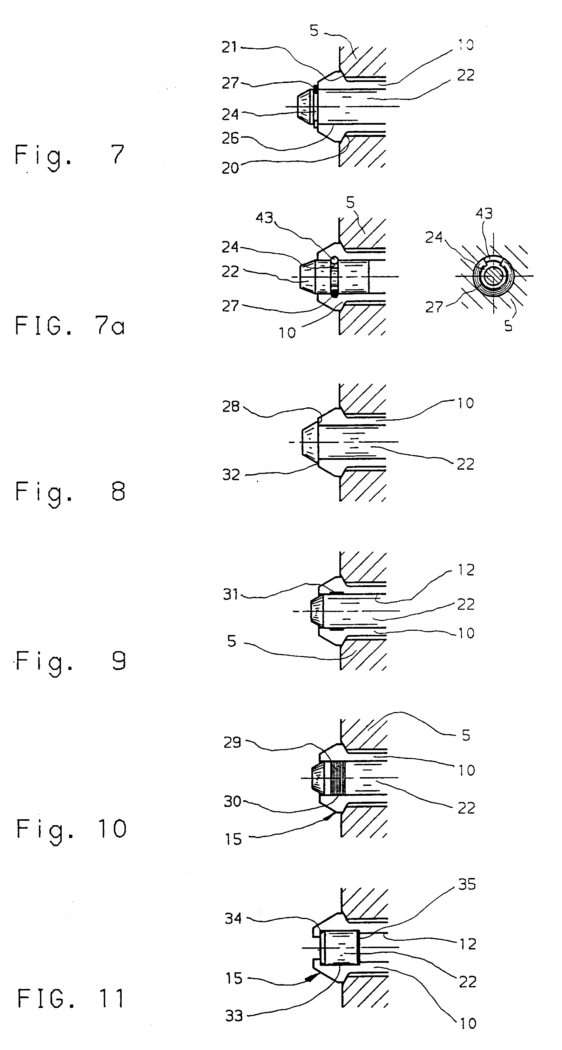

Obwohl die Verformung der Spannhülse 10 in Achsrichtung, d.h. deren Längendehnung bevorzugt im Bereich der plastischen Verformung liegt, ist es zweckmäßig, daß die Spannbolzen 22 in der Bohrung 12 der Spannhülse 10 verbleiben. Um ihre Position unter allen Betriebszuständen zu sichern, können verschiedene Sicherungsmöglichkeiten gewählt werden. Verschiedene Beispiele sind in den Figuren 7 bis 11 dargestellt. So ist zum Beispiel bei einem Spannbolzen 22, der axial länger bemessen ist als die Spannhülse 10, also im montierten Zustand aus dieser axial herausragt, eine Sicherung über einen Sicherungsring 27 möglich, der in eine Nut 24 des Spannbolzens 22 eingesetzt ist. In Fig. 7 a ist eine weitere axiale Sicherungsmöglichkeit des Spannbolzens 22 dargestellt. Der Spannbolzen 22 ist mit einer Nut 24 versehen, in der sich ein Sicherungsring 27 befindet. Auch in die Bohrung der Segmente 14 ist eine Nut 43 eingearbeitet, in der der Sicherungsring 27 auffedern kann, wenn die Endlage des Spannbolzens 22 beim Einpressen erreicht wird. Für einen aus der Spannhülse 10 herausragenden Spannbolzen 22 bietet sich auch eine Sicherung, wie sie in Figur 8 dargestellt ist, an. In diesem Fall ist das aus der Spannhülse 10 herausragende Ende des Spannbolzens 22 mit einer oder mehreren umfangsverteilten Sperrnasen 28 versehen, welche sich axial an einer Stirnfläche 32 der Spannhülse 10 abstützen können.

Bei dem Ausführungsbeispiel gemäß Figur 9 ist die Bohrung 12 der Spannhülse 10 mit einer geringen Eindrehung versehen, in welcher ein Klebeschicht 31 eingelagert ist.

Beim Ausführungsbeispiel nach Figur 10 ist in der Bohrung 12 der Spannhülse 10 über eine bestimmte axiale Länge im Bereich des Einführungsendes 15 eine Mikroverzahnung 29 vorgesehen, die mit einer entsprechend positionierten Mikroverzahnung 30 auf der Außenfläche des Spannbolzens 22 zusammenarbeitet.

Beim Ausführungsbeispiel nach Figur 11 ist die Bohrung 12 der Spannhülse 10 im Bereich des Einführendes 15 mit einer Eindrehung 33 versehen. Deren axiale Länge entspricht der des Spannbolzens 22. Nach dem Einpressen des Spannbolzens 22 wird dieser zwischen den Schultern 34 und 35 der Eindrehung 33 einrastend aufgenommen. Dies kann für die Demontage genutzt werden. Durch Einwirken eines Werkzeuges auf den Spannbolzen 22 in Richtung auf das Einführende 15 zu bewirkt, daß dieser sich gegen die Schulter 34 abstützt und beim Aufbringen einer genügend großen Auspreßkraft die Segmente 14 der Spannhülse 10 abreißen.

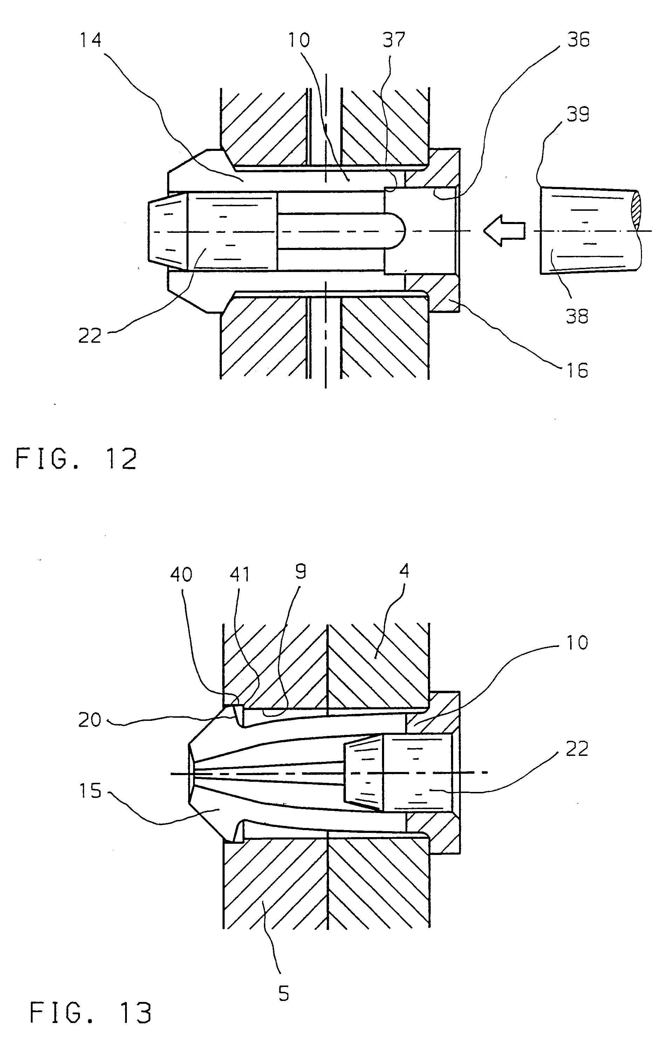

Bei dem in Figur 12 dargestellten Ausführungsbeispiel ist zur Demontage der Verbindung eine Bohrungsstufe 36 vorgesehen, die vom Bund 16 ausgeht und eine Ringfläche 37 als Anlagefläche für die Stirnfläche 39 eines Auspreßwerkzeuges 38 bildet. Durch Aufbringung einer entsprechend hohen Preßkraft über das Auspreßwerkzeug 38 und dessen Stirnfläche 39 auf die Ringfläche 37 wird ein Abreißen der Segmente 14 der Spannhülse 10 und damit ein Lösen der Verbindung bewirkt.

Figur 13 zeigt eine weitere Gestaltungsmöglichkeit, welche eine Vorfixierung der beiden Flansche 4,5 einandergegenüber vor dem Festlegen der endgültigen Verbindung durch Einpressen der Spannbolzen 22 in die Bohrung der Spannhülse ermöglicht. Hierzu ist der Gegenflansch 5 ausgehend von seiner Widerlagerfläche mit einer im Durchmesser größer als die Bohrung 9 ausgebildeten Ausdrehung 40 versehen, die eine Ringkante 41 im Übergang zur Bohrung 9 bildet. Diese Ringkante 41 kann genutzt werden, um eine vorläufige Fixierung und axiale Festlegung der Spannhülse 10 gegenüber dem Gegenflansch 5 zu bewirken. Dabei hintergreift die Stützfläche 20 die Ringkante 41 und hält Flansch 4 und Gegenflansch 5 in einer ungefähren axialen Anlage zueinander.

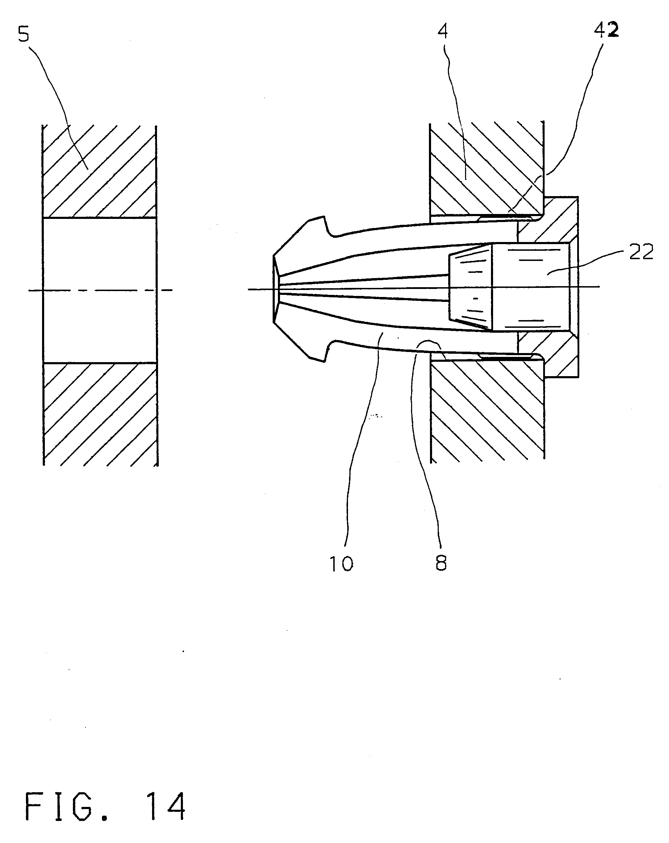

Eine Alternative, die die Vormontage der Spannhülse 10 gegenüber dem Flansch 4 ermöglicht, ist aus Figur 14 ersichtlich. Hierbei ist die Spannhülse 10 auf ihrer an den Bund 16 anschließenden Außenfläche im Durchmesser mit einer Verdickung 42 vergrößert ausgebildet. Mit dieser Verdickung 42 ist die Spannhülse 10 in der Bohrung 8 des Flansches 4 fixiert. Dabei kann sich der verdickte Bereich 42 sowohl über den gesamten Umfang der Spannhülse 10 als auch auf einzelne Segmente 14 in Form von Buckeln erstrecken. Durch Einpressen wird die Spannhülse 10 in der Bohrung 8 des Flansches 4 axial gesichert. Dadurch ist es z.B. möglich, den zu einer Gelenkwelle gehörenden Flansch 4 komplett mit Spannhülsen 10 zu bestücken und ihn dann mit dem Gegenflansch 5 zusammenzuführen, was eine Montagevereinfachung unter dem Fahrzeug bedeutet. Die Verspannung kann auch durch teilweises Einpressen des Spannbolzens 22 bewirkt werden. Bei der endgültigen Montage wird der Spannbolzen weiter in Richtung auf das Einführende 15 vorbewegt.

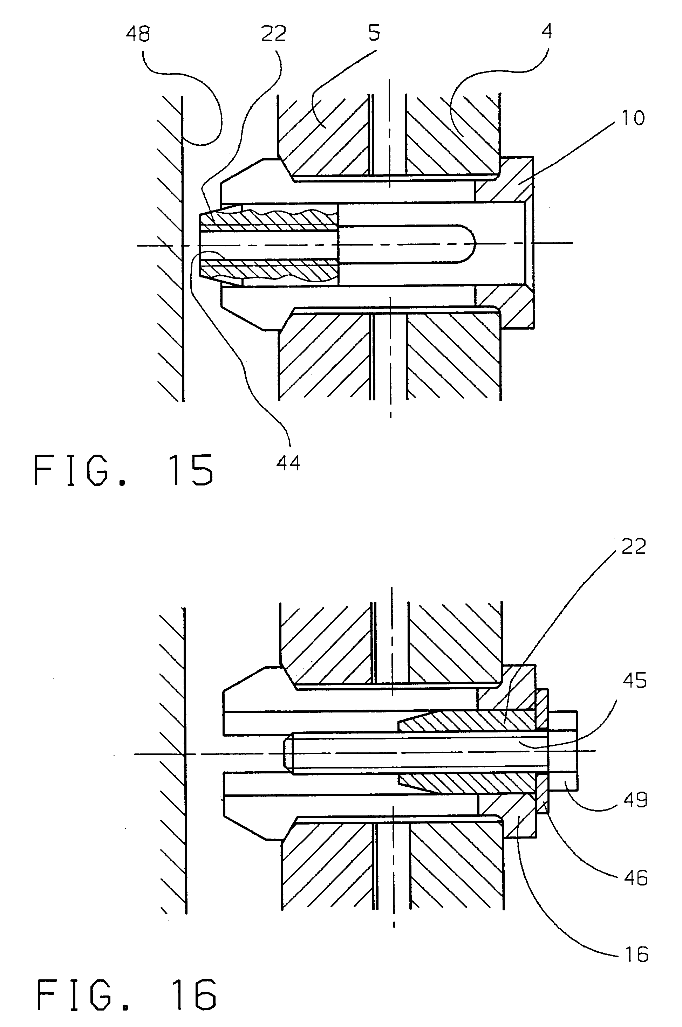

Beim Ausführungsbeispiel nach Fig. 15 ist der Spannbolzen 22 mit einer Gewindebohrung 44 versehen, die ein Herausziehen des Spannbolzens 22 aus der Spannhülse ermöglicht. Diese Demontagemöglichkeit hat bei begrenzten Platzverhältnissen den Vorteil, daß der Spannbolzen 22 nicht durch die Spannhülse 10 geschlagen werden muß. Fig. 16 zeigt eine mögliche Demontage des Spannbolzens 22, der mittels einer handelsüblichen Schraube 45, deren Kopf 49 sich gegen eine am Bund 16 anliegende Stützscheibe 46 abgestützt ist, in den Schaftbereich der Spannhülse 10 gezogen wurde. Die Spannhülse 10 kann anschließend herausgezogen werden.

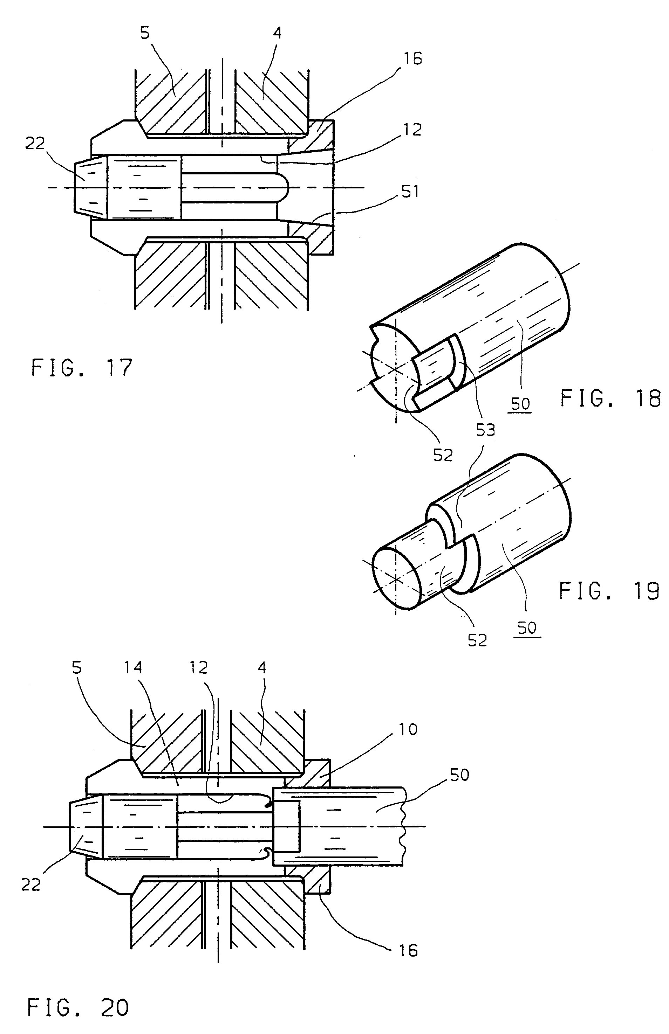

Fig. 17 zeigt eine weitere Gestaltungsmöglichkeit der Spannhülse 10, um eine einfache Demontage durch Zerstörung der Segmente 14 zu erreichen. Dazu ist die Spannhülse 10 mit einer kegelförmigen Bohrung 51 versehen, in der ein abgestufter Dorn (Fig. 18/19) eindringen kann und durch Spanbildung eine Auflagefläche geschaffen wird, um die Segmente 14 abzureißen. (s. Fig. 20). Der Dorn 51 ist mit mindestens einer Stufe 52,53 abgestuft, damit eine geringe Auspreßkraft erreicht wird. Die Stufen 52,53 dringen beim Auspressen nacheinander in die Segmente 14 ein und reißen diese nacheinander ab. Dadurch ist auch nur die für die momentan beaufschlagten Segmente 14 notwendige Abreißkraft erforderlich.

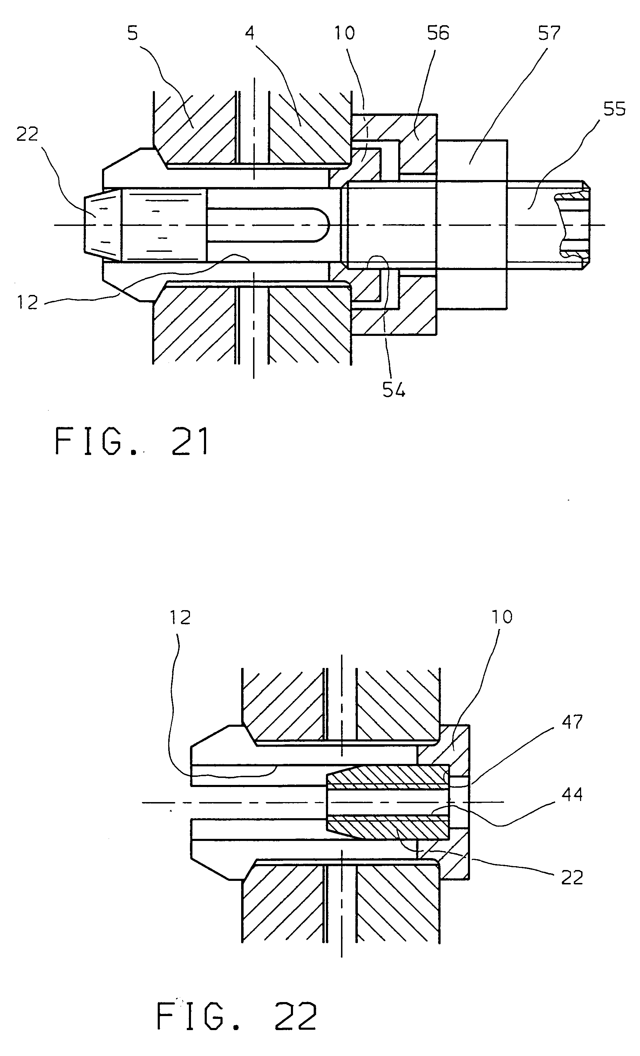

Fig. 21 zeigt eine Demontagemöglichkeit durch Zerstörung der Segmente 14. Die Spannhülse 10 ist mit einem Innengewinde 54 versehen, in das ein Ausziehgewindestift 55 eingeschraubt werden kann. Über eine Buchse 56 kann eine Kraft, die durch das Anziehen einer Ausziehmutter 57 erzeugt wird, abgestützt werden, bis die Segmente 14 abreißen und die Spannhülse 10 zerstört wird, um die Flansche 4 und 5 zu demontieren.

Beim Ausführungsbeispiel nach Fig. 22 ist die Spannhülse 10 im Bereich der Bohrung 12 mit einer Anlaufschulter 47 versehen und der Spannbolzen 22 mit einer Gewindebohrung 44. Die Gewindebohrung 44 im Spannbolzen 22 ermöglicht, mit der Hilfe eines geeigneten Demontagewerkzeuges, ein Zurückziehen des Spannbolzens 22 bis an die Anlaufschulter 47 der Spannhülse 10. Ein weiteres Ziehen an dem Spannbolzen 22 ermöglicht ein Herausziehen der Spannhülse 10 und somit eine Demontage der Flanschverbindung.

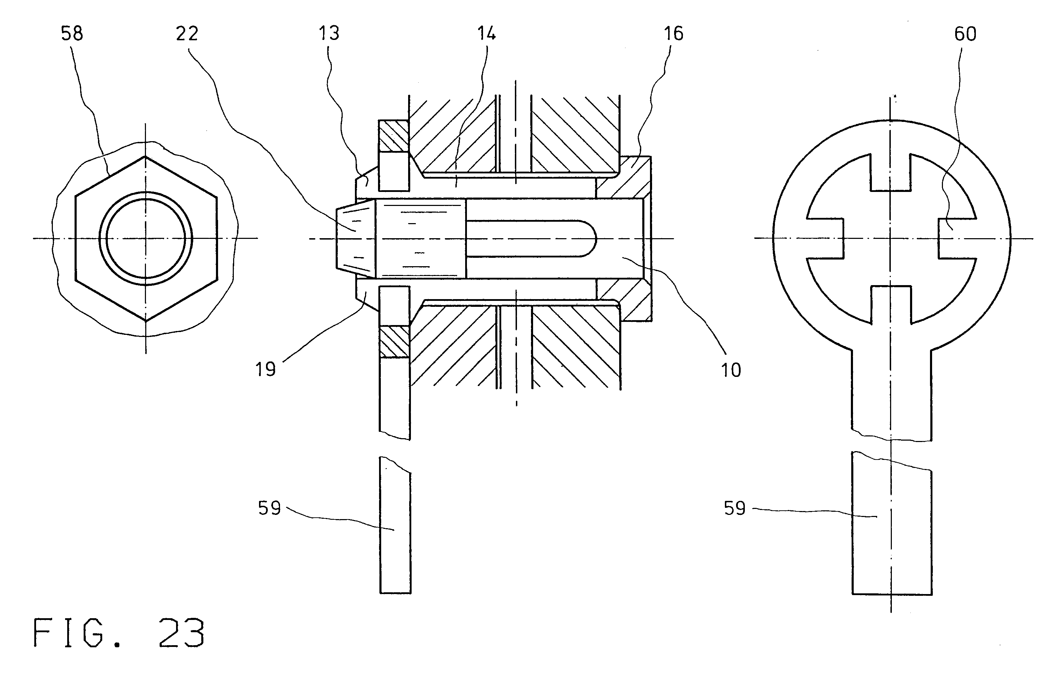

Fig. 23 stellt eine weitere Demontagemöglichkeit dar. Der Bund 16 der Spannhülse 10 ist mit einer geeigneten Schlüsselfläche 58 versehen, an der ein handelsübliches Werkzeug, wie z.B. ein Ringschlüssel für Sechskantschrauben angreifen kann. Auf den Bund 19 kann ein Schlüssel 59, wie er in der Zeichnung rechts dargestellt ist, gesteckt werden, der mit Nasen 60 versehen ist, die in die Schlitze 13 greifen. Durch das Drehen des Schlüssels 59 und durch Gegenhalten mit einem Ringschlüssel an dem Bund 16 können die Segmente 14 so weit gedehnt und verformt werden, bis sie abreißen und die Verbindung gelöst wird.

Bei einem typischen Ausführungsbeispiel für eine solche Flanschverbindung sind folgende Abmessungen in Millimeter (mm) vorgesehen:

| | | |
|---|---|---|
| X | Dicke der beiden Flansche | 28 mm |
| L | Länge der Hülse | 27 mm |
| | Durchmesser des Spannbolzens 22 | 10 mm |
| | Bohrung der Spannhülse 10 | 10 mm |
| | Schaft/Durchmesser der Spannhülse | 15 mm |
| | Bohrung 8,9 der Flansche | 17 mm |
| | Außendurchmesser des Bundes 16 der Spannhülse | 21 mm |

Als Werkstoff kommt z.B. 41Cr4 infrage.

### Bezugszeichenliste

- 1: Gelenkwelle
- 2: Gelenk
- 3: Zwischenwelle
- 4: Flansch / erstes Bauteil
- 5: Gegenflansch / zweites Bauteil
- 6: Fahrzeug
- 7: Verzahnung
- 8: Bohrung im Flansch
- 9: Bohrung im Gegenflansch
- 10: Spannhülse
- 11: Achse
- 12: Bohrung der Spannhülse
- 13: Schlitz
- 14: Segment
- 15: Einführende
- 16: Bund
- 17: Anlagefläche des Bundes
- 18: Anlagefläche des Flansches
- 19: Weiterer Bund
- 20: Stützfläche
- 20a: Kante der Stützfläche
- 21: Widerlagerfläche des Gegenflansches
- 21a: Kante der Widerlagerfläche
- 22: Spannbolzen
- 23: Kopf des Spannbolzens
- 24: Nut im Spannbolzen
- 25: Konus des Spannbolzens
- 26: Außenfläche des Spannbolzens
- 27: Sicherungsring
- 28: Sperrnase am Spannbolzen
- 29: Mikroverzahnung der Spannhülse
- 30: Mikroverzahnung des Spannbolzens
- 31: Klebeschicht
- 32: Stirnfläche der Spannhülse
- 33: Eindrehung
- 34: Schulter der Eindrehung
- 35: Schulter der Eindrehung
- 36: Bohrungsstufe
- 37: Ringfläche
- 38: Auspreßwerkzeug/Bolzen
- 39: Stirnfläche des Auspreßwerkzeuges
- 40: Ausdrehung
- 41: Ringkante
- 42: Verdickung
- 43: Nut in Spannhülse
- 44: Gewindebohrung im Spannbolzen
- 45: Schraube
- 46: Stützscheibe
- 47: Anlaufschulter
- 48: angrenzendes Bauteil
- 49: Schraube
- 50: Dorn
- 51: Bohrung
- 52,53: Stufen
- 54: Gewindebohrung
- 55: Ausziehstift
- 56: Buchse
- 57: Ausziehmutter
- 58: Schlüsselfläche
- 59: Schlüssel
- 60: Nasen
- α: Neigungswinkel
- L: freie Spannlänge
- X: Abstand der Flanschanlageflächen (Anlagefläche und Widerlagefläche)

## Patentansprüche

1. Bauteilverbindung zur Verbindung zweier Bauteile (4,5), insbesondere Flanschverbindung für die Verbindung eines Befestigungsflansches einer Gelenkwelle als erstem Bauteil (4) mit dem Gegenflansch als zweitem Bauteil (5) in einem Kraftfahrzeug, mit in verteilt angeordneten und zueinander korrespondierenden Bohrungen der beiden Bauteile (4,5) ineinandergesteckt angeordneten und an Anlageflächen der Bauteile (4,5) sich abstützenden Spannelementen,
dadurch gekennzeichnet,
daß die Spannelemente aus einer von ihrem Einführende (15) ausgehend axial geschlitzten Spannhülse (10) und einem darin einführbaren Spannbolzen (22) bestehen, daß die Spannhülse (10) an ihrem dem Einführende (15) abgewandten Ende einen Bund (16) aufweist, mit dessen Anlagefläche (17) sie sich an einer Anlagefläche (18) des ersten Bauteiles (4) abstützt, und am Einführungsende (15) einen weiteren Bund (19) mit einer Stützfläche (20) aufweist, die nach radialer Aufweitung durch den Spannbolzen (22) an einer Widerlagerfläche (21) des zweiten Bauteiles (5) anliegt, und daß die freie axiale Länge (L) der Spannhülse (10) zwischen der Anlagefläche (17) des Bundes (16) und der Stützfläche (20) des weiteren Bundes (19) vor der Montage kleiner ist als der Abstand (X) zwischen Anlagefläche (18) und Widerlagerfläche (21) der aneinanderliegenden Bauteile (4,5).

2. Bauteilverbindung nach Anspruch 1,
dadurch gekennzeichnet,
daß die axiale Länge (L) um ein Maß geringer ist als der Abstand (X) der Flanschanlageflächen (18,21), das mindestens der elastischen Dehnung der Spannhülse (10) entspricht, aber unterhalb der Bruchdehnung der Spannhülse (10) liegt.

3. Bauteilverbindung nach Anspruch 1,
dadurch gekennzeichnet,
daß die Stützfläche (20) unter einem Winkel (α) geneigt zur Längsachse (11) der Spannhülse (10) verläuft, der vom rechten Winkel abweicht.

4. Bauteilverbindung nach Anspruch 3,
dadurch gekennzeichnet,
daß der Winkel (α) 60° beträgt.

5. Bauteilverbindung nach Anspruch 3,
dadurch gekennzeichnet,
daß die Widerlagerfläche (21) ebenfalls geneigt verläuft und deren Neigung der der Stützfläche (20) der Spannhülse (10) entspricht.

6. Bauteilverbindung nach Anspruch 1,
dadurch gekennzeichnet,
daß der Spannbolzen (22) kürzer bemessen ist als die Spannhülse (10).

7. Bauteilverbindung nach Anspruch 1,
dadurch gekennzeichnet,
daß die Länge des Spannbolzens (22) der der Spannhülse (10) entspricht.

8. Bauteilverbindung nach Anspruch 1,
dadurch gekennzeichnet,
daß die Länge des Spannbolzens (22) größer ist als die der Spannhülse (10).

9. Bauteilverbindung nach einem der Ansprüche 7 oder 8,
dadurch gekennzeichnet,
daß der Spannbolzen (22) mit einem Kopf (23) versehen ist.

10. Bauteilverbindung nach Anspruch 1,
dadurch gekennzeichnet,
daß der Spannbolzen (22) nach Montage gegen Auszug aus der Spannhülse (10) gesichert ist.

11. Bauteilverbindung nach Anspruch 10,
dadurch gekennzeichnet,
daß der Spannbolzen (22) gegenüber der Spannhülse (10) durch einen Sicherungsring (27) gegen Auszug gesichert ist.

12. Bauteilverbindung nach Anspruch 11,
dadurch gekennzeichnet,
daß das aus der Spannhülse (10) herausragende und dem Kopf (23) entfernte Ende des Spannbolzens (22) eine Nut (24) für einen Sicherungsring (27) aufweist, der sich gegen die Stirnfläche des weiteren Bundes (19) abstützt.

13. Bauteilverbindung nach Anspruch 11,
dadurch gekennzeichnet,
daß der Sicherungsring (27) in Nuten (24,43) von Spannhülse (10) und Spannbolzen (22) einsitzt.

14. Bauteilverbindung nach Anspruch 10,
dadurch gekennzeichnet,
daß der Spannbolzen (22) eine Sperrnase (28) aufweist, die sich nach Passieren der Bohrung (12) der Spannhülse (10) an die der Stützfläche (20) nächstliegende Stirnfläche (32) der Spannhülse (10) anlegt.

15. Bauteilverbindung nach Anspruch 10,
dadurch gekennzeichnet,
daß der Spannbolzen (22) auf seiner Außenfläche (26) und die Spannhülse (10) in ihrer Bohrung (12) mit einer nach Montage ineinandergreifenden Mikroverzahnung (29,30) versehen sind.

16. Bauteilverbindung nach Anspruch 10,
dadurch gekennzeichnet,
daß eine Verklebung zur Sicherung vorhanden ist.

17. Bauteilverbindung nach Anspruch 10,
dadurch gekennzeichnet,
daß die Spannhülse (10) im Bereich ihres Einführendes (15) in ihrer Bohrung (12) eine Eindrehung (33) zur Aufnahme des Spannbolzens (22) im montierten Zustand aufweist.

18. Bauteilverbindung nach einem der vorangehenden Ansprüche,
dadurch gekennzeichnet,
daß das zweite Bauteil (5) zur Widerlagerfläche (21) hin in seiner Bohrung (9) eine Ringkante (41) aufweist.

19. Bauteilverbindung nach einem der Ansprüche 1 bis 15,
dadurch gekennzeichnet,
daß die Spannhülse (10) auf ihrem an den Bund (16) angrenzenden und in die Bohrung (8) des erstes Bauteil (4) reichenden Außenabschnitt mit einer die Spannhülse (10) vormontiert am erstes Bauteil (4) haltenden Verdickung (42) versehen ist.

20. Bauteilverbindung nach einem der Ansprüche 1 bis 17,
dadurch gekennzeichnet,
daß die Spannhülse (10) in ihrer Bohrung (12) eine Ringfläche (37) als Abstützbasis für ein Auspreßwerkzeug (38) in Richtung auf das Einführende (15) der Spannhülse (10) zu aufweist.

21. Bauteilverbindung nach Anspruch 20,
dadurch gekennzeichnet,
daß die Ringfläche (37) Teil einer von dem Bund (16) der Spannhülse (10) ausgehenden Bohrungstufe (36) ist.

22. Bauteilverbindung nach den Ansprüchen 17 und 21,
dadurch gekennzeichnet,
daß der sich an der dem Einführende (15) benachbarten Schulter (34) abstützende Spannbolzen (22) die Abstützbasis für das Auspreßwerkzeug (38) bildet.

23. Bauteilverbindung nach einem der Ansprüche 1 bis 19,
dadurch gekennzeichnet,
daß der Spannbolzen (22) mit einer durchgehenden Gewindebohrung (44) versehen ist.

24. Bauteilverbindung nach Anspruch 23,
dadurch gekennzeichnet,
daß die Spannhülse (10) beidseitig in ihrer Bohrung (12) eine Anlaufschulter (47) für den zurückgezogenen Spannbolzen (22) aufweist.

25. Bauteilverbindung nach einem der Ansprüche 1 bis 19,
dadurch gekennzeichnet,
daß die Spannhülse (10) mittels eines von der Seite des Bundes (16) her in die Bohrung (12) eingepreßten Dornes (50), der die Segmente (14) zerstört, lösbar ist.

26. Bauteilverbindung nch Anspruch 25,
daß die Spannhülse (10) mit einer durch den Bund (16) verlaufenden und bis zu den Segmenten (14) reichenden kegeligen Bohrung (51) versehen ist.

27. Bauteilverbindung nach einem der Ansprüche 1 bis 19,
dadurch gekennzeichnet,
daß die Bohrung (12) der Spannhülse (10) im Bereich des Bundes (16) als Gewindebohrung (54) für einen Ausziehstift (55) ausgestaltet ist.

28. Bauteilverbindung nach einem der Ansprüche 1 bis 19,
dadurch gekennzeichnet,
daß der Bund (16) der Spannhülse (10) als Schlüsselsechskant (58) ausgebildet ist.

## Claims

1. A connection between two components (4, 5), especially a flanged connection for connecting a fixing flange of a propeller shaft constituting the first component (4) to the counter flange constituting the second component (5) in a motor vehicle, having tensioning elements which are arranged so as to be inserted into one another in bores of the components (4, 5), said bores being arranged so as to be spaced and corresponding to one another, and said tensioning elements further being supported on contact faces of the components (4, 5),
characterised in
that the tensioning elements consist of a tensioning sleeve (10) axially slotted from its insertion end (15) and of a tensioning pin insertable into said sleeve; that at its end facing away from the insertion end (15), the tensioning sleeve (10) comprises a collar (16) with a contact face (17) by means of which it is supported on a contact face (18) of the first component (4) and that at its insertion end (15), said tensioning sleeve (10) comprises a further collar (19) with a supporting face (20) which, after having been radially expanded by the tensioning pin (22), rests against an abutment face (21) of the second component (5); and that, prior to assembly, the free axial length (L) of the tensioning sleeve (10) between the contact face (17) of the collar (16) and the supporting face (20) of the further collar (19) is smaller than the distance (X) between the contact face (18) and the abutment face (21) of the contacting components (4, 5).

2. A connection between components, according to claim 1,
characterised in
that the axial length (L) is smaller than the distance (X) between the flange contact faces (18, 21) by a dimension which corresponds at least to the elastic elongation of the tensioning sleeve (10), but which is smaller than the elongation at rupture of the tensioning sleeve (10).

3. A connection between components, according to claim 1,
characterised in
that the supporting face (20) is inclined at an angle (α) relative to the longitudinal axis (11) of the tensioning sleeve (10), which angle deviates from a right angle.

4. A connection between components, according to claim 3,
characterised in
that the angle (α) amounts to 60°.

5. A connection between components, according to claim 3,
characterised in
that the abutment face (21) is also inclined and that its angle of inclination corresponds to that of the supporting face (20) of the tensioning sleeve (10).

6. A connection between components, according to claim 1,
characterised in
that the tensioning pin (22) is shorter than the tensioning sleeve (10).

7. A connection between components, according to claim 1,
characterised in
that the length of the tensioning pin (22) corresponds to that of the tensioning sleeve (10).

8. A connection between components, according to claim 1,
characterised in
that the length of the tensioning pin (22) is greater than that of the tensioning sleeve (10).

9. A connection between components, according to any one of claims 7 or 8,
characterised in
that the tensioning pin (22) is provided with a head (23).

10. A connection between components, according to claim 1,
characterised in
that after having been fitted, the tensioning pin (22) is secured against being extracted from the tensioning sleeve (10).

11. A connection between components, according to claim 10,
characterised in
that the tensioning pin (2) is secured by a securing ring (27) against being extracted from the tensioning sleeve (10).

12. A connection between components, according to claim 11,
characterised in
that the tensioning pin (22) end projecting from the tensioning sleeve (10) and facing away from the head (23) comprises a groove (24) for a securing ring (27) which is supported against the end face of the further collar (19).

13. A connection between components, according to claim 11,
characterised in
that the securing ring (27) engages grooves (24, 43) of the tensioning sleeve (10) and the tensioning pin (22).

14. A connection between components, according to claim 10,
characterised in
that the tensioning pin (22) comprises a locking projection (28) which, after having passed through the bore (12) of the tensioning sleeve (10), rests against the end face (32) of the tensioning sleeve (10) which is nearest to the supporting face (20).

15. A connection between components, according to claim 10,
characterised in
that the outer face (26) of the tensioning pin (22) and the bore (12) of the tensioning sleeve (10) are provided with micro-teeth which engage one another after assembly.

16. A connection between components, according to claim 10,
characterised in
that glue is provided to secure the connection.

17. A connection between components, according to claim 10,
characterised in
that in the region of its insertion end (15), in its bore (12), the tensioning sleeve (10) comprises a recess (33) for receiving the tensioning pin (22) in the fitted condition.

18. A connection between components, according to any one of the preceding claims,
characterised in
that the second component (5), towards the abutment face (21), in its bore (9), comprises an annular edge (41).

19. A connection between components, according to any one of claims 1 to 15,
characterised in
that on its outer portion adjoining the collar (16) and extending into the bore (8) of the first component (4), the tensioning sleeve (10) is provided with a thickened portion (42) holding the tensioning sleeve (10) at the first component (4) in a pre-fitted condition.

20. A connection between components, according to any one of claims 1 to 17,
characterised in
that in its bore (12), the tensioning sleeve (10) comprises an annular face (37) constituting a supporting base for an ejection tool (38) acting in the direction of the insertion end (15) of the tensioning sleeve (10).

21. A connection between components, according to claim 20,
characterised in
that the annular face (37) forms part of a bore step (36) starting from the collar (36) of the tensioning sleeve (10).

22. A connection between components, according to claims 17 and 21,
characterised in
that the tensioning pin (22) being supported on the shoulder (34) adjoining the insertion end (15) forms the supporting base for the ejection tool (38).

23. A connection between components, according to any one of claims 1 to 19,
characterised in
that the tensioning pin (22) is provided with a threaded through-bore (44).

24. A connection between components, according to claim 23,
characterised in
that at both ends of its bore (12), the tensioning sleeve (10) is provided with a stop shoulder (47) for the withdrawn tensioning pin (22).

25. A connection between components, according to any one of claims 1 to 19,
characterised in
that the tensioning sleeve (10) may be released by a mandrel (50) which is pressed into the bore (12) from the end of the collar (16) and which destroys the segments (14).

26. A connection between components, according to claim 25,
characterised in
that the tensioning sleeve (10) is provided with a conical bore (51) which extends through the collar (16) and extends as far as the segments (14).

27. A connection between components according to any one of claims 1 to 19,
characterised in
that in the region of the collar (16), the bore (12) of the tensioning sleeve (10) is provided in the form of a threaded bore (54) for an extraction pin (55).

28. A connection between components, according to any one of claims 1 to 19,
characterised in
that the collar (16) of the tensioning sleeve (10) is shaped like a spanner hexagon (58).

## Revendications

1. Dispositif de liaison destiné à relier deux composants (4, 5), en particulier dispositif de liaison à bride pour relier une bride de fixation d'un arbre de cardan en tant que premier composant (4), à une contre-bride en tant que second composant (5) dans un véhicule automobile, comprenant des éléments de serrage agencés enfilés l'un dans l'autre dans des perçages, agencés de façon répartie et correspondant les uns aux autres dans les deux composants (4, 5), lesdits éléments de serrage s'appuyant sur des surfaces d'appui des composants (4, 5),
caractérisé en ce que
les éléments de serrage sont constitués par une douille de serrage (10) fendue axialement en partant de son extrémité d'entrée (15) et un goujon de serrage (22) susceptible d'être introduit dans ladite douille,
en ce que la douille de serrage (10) comporte à son extrémité éloignée de l'extrémité d'entrée (15) un bourrelet (16), ladite douille de serrage s'appuyant sur une surface d'appui (18) du premier composant (4) au moyen de la surface d'appui (17) dudit bourrelet, et ladite douille de serrage comportant à l'extrémité d'entrée (15) un second bourrelet (19) avec une surface de support (20) qui s'appuie, après évasement radial au moyen du goujon de serrage (22), sur une contre-surface (21) du second composant (5),
et en ce que la longueur axiale libre (L) de la douille de serrage (10) entre la surface d'appui (16) du bourrelet (16) et la surface de support (20) du second bourrelet (19) avant le montage est inférieure à la distance (X) entre la surface d'appui (18) et la contre-surface (21) des composants (4, 5) situés l'un contre l'autre.

2. Dispositif de liaison selon la revendication 1, caractérisé en ce que la longueur axiale (L) est inférieure à la distance (X) des surfaces d'appui des brides (18, 21), d'une quantité qui correspond au moins à l'allongement élastique de la douille de serrage (10), mais qui est inférieure à l'allongement de rupture de la douille de serrage (10).

3. Dispositif de liaison selon la revendication 1, caractérisé en ce que la surface de support (20) est inclinée par rapport à l'axe longitudinal (11) de la douille de serrage (10) sous un angle (α) qui diffère d'un angle droit.

4. Dispositif de liaison selon la revendication 3, caractérisé en ce que l'angle (α) est égal à 60°.

5. Dispositif de liaison selon la revendication 3, caractérisé en ce que la contre-surface (21) s'étend également de manière inclinée, et son inclinaison correspond à celle de la surface de support (20) de la douille de serrage (10).

6. Dispositif de liaison selon la revendication 1, caractérisé en ce que le goujon de serrage (22) est plus court que la douille de serrage (10).

7. Dispositif de liaison selon la revendication 1, caractérisé en ce que la longueur du goujon (22) correspond à celle de la douille de serrage (10).

8. Dispositif de liaison selon la revendication 1, caractérisé en ce que la longueur du goujon de serrage (22) est supérieure à celle de la douille de serrage (10).

9. Dispositif de liaison selon l'une ou l'autre des revendications 7 et 8, caractérisé en ce que le goujon de serrage (22) est pourvu d'une tête (23).

10. Dispositif de liaison selon la revendication 1, caractérisé en ce que le goujon de serrage (22) est assuré après le montage contre une extraction hors de la douille de serrage (10).

11. Dispositif de liaison selon la revendication 10, caractérisé en ce que le goujon de serrage (22) est assuré contre une extraction par rapport à la douille de serrage (10) au moyen d'un anneau de sécurité (27).

12. Dispositif de liaison selon la revendication 11, caractérisé en ce que l'extrémité du goujon de serrage (22) éloignée de la tête et dépassant hors de la douille de serrage (10) comporte une gorge (24) pour un anneau de sécurité (27) qui s'appuie contre la surface frontale du second bourrelet (19).

13. Dispositif de liaison selon la revendication 11, caractérisé en ce que l'anneau de sécurité (27) est logé dans des gorges (24, 43) de la douille de serrage (10) et du goujon de serrage (22).

14. Dispositif de liaison selon la revendication 10, caractérisé en ce que le goujon de serrage (22) comporte un ergot de blocage (28) qui, après être passé par le perçage (12) de la douille de serrage (10) s'applique contre la surface frontale (32) de la douille de serrage (10) la plus proche de la surface de support (20).

15. Dispositif de liaison selon la revendication 10, caractérisé en ce que le goujon de serrage (22) est pourvu sur sa surface extérieure (26) d'une microdenture (29), et la douille de serrage (10) est pourvue dans son perçage (12) d'une microdenture (30), lesdites microdentures étant en engrènement mutuel après le montage.

16. Dispositif de liaison selon la revendication 10, caractérisé en ce qu'il est prévu un collage en vue du blocage.

17. Dispositif de liaison selon la revendication 16, caractérisé en ce que la douille de serrage (10) comporte dans son perçage (12) dans la région de son extrémité d'entrée (15) un élargissement (33) destiné à recevoir le goujon de serrage (22) à l'état monté.

18. Dispositif de liaison selon l'une quelconque des revendications précédentes, caractérisé en ce que le second composant (5) comporte dans son perçage (9) une arête annulaire (41) dirigée vers la contre-surface (21).

19. Dispositif de liaison selon quelconque des revendications 1 à 15, caractérisé en ce que la douille de serrage (10) est pourvue d'un épaississement (42) sur son tronçon extérieur qui fait suite au bourrelet (16) et qui pénètre dans le perçage (8) du premier composant (4), ledit épaississement (42) retenant la douille de serrage (10) prémontée sur le premier composant (4).

20. Dispositif de liaison selon quelconque des revendications 1 a 17, caractérisé en ce que la douille de serrage (10) comporte dans son perçage (12) une surface annulaire (37) en tant que base d'appui pour un outil d'éjection (38), en direction de l'extrémité d'entrée (15) de la douille de serrage (10).

21. Dispositif de liaison selon la revendication 20, caractérisé en ce que la surface annulaire (37) forme partie d'un gradin (36) du perçage en partant du bourrelet (16) de la douille de serrage (10).

22. Dispositif de liaison selon les revendications 17 et 21, caractérisé en ce que le goujon de serrage (22), qui s'appuie contre l'épaulement (34) voisin de l'extrémité d'entrée (15), forme la base d'appui pour l'outil d'éjection (38).

23. Dispositif de liaison selon l'une quelconque des revendications 1 à 19, caractérisé en ce que le goujon de serrage (22) est pour'vu d'un perçage taraudé traversant (44).

24. Dispositif de liaison selon la revendication 23, caractérisé en ce que la douille de serrage (10) comporte des deux côtés de son perçage (12) un épaulement de butée (47) pour le goujon de serrage (22) reculé.

25. Dispositif de liaison selon l'une quelconque des revendications 1 à 19, caractérisé en ce que la douille de serrage (10) peut être libérée au moyen d'un poinçon (50) enfoncé dans le perçage (12) depuis le côté du bourrelet (16), qui détruit les segments (14).

26. Dispositif de liaison selon la revendication 25, caractérisé en ce que la douille de serrage (10) est pour'vue d'un perçage conique (51) qui traverse le bourrelet (16) et qui s'étend jusqu'aux segments (14).

27. Dispositif de liaison selon l'une quelconque des revendications 1 à 19, caractérisé en ce que le perçage (12) de la douille de serrage (10) est réalisé dans la région du bourrelet (16) sous la forme d'un perçage taraudé (54) pour une tige d'extraction (55).

28. Dispositif de liaison selon l'une quelconque des revendications 1 à 19, caractérisé en ce que le bourrelet (16) de la douille de serrage (10) est réalisé sous la forme d'une tête (58) pour une clé hexagonale.
